# FASCICULE DE BREVET EUROPEEN

(11) **EP 2 610 175 B1**
(45) Date de publication et mention de la délivrance du brevet: **18.04.2018**
(21) Numéro de dépôt: 12007713.6
(22) Date de dépôt: 14.11.2012
(51) Int. Cl.: B64C 27/35, F16F 1/387

(54) **Butée lamifiée, rotor muni d'une telle butée, et aéronef**
Gewälztes Drucklager, Rotor mit einem solchen Lager und Flugzeug
Laminated thrust bearing, rotor provided with such a bearing and aircraft

(30) Priorité: 27.12.2011 FR 1104112
(43) Date de publication de la demande: 03.07.2013
(73) Titulaire: Airbus Helicopters, 13725 Marignane Cedex (FR)
(72) Inventeur: Ferrant, Matthieu, 13090 AIX EN PROVENCE (FR); Legrand, Mathieu, 13100 AIX EN PROVENCE (FR)
(74) Mandataire: GPI & Associés

(56) Documents cités:
- EP-A2- 0 187 265
- WO-A1-2010/068209
- GB-A- 660 560
- US-A- 2 958 526
- US-A1- 2003 235 499

## Description

La présente invention concerne une butée lamifiée, un rotor muni d'une telle butée, et un aéronef. Plus particulièrement, l'invention concerne un aéronef à voilure tournante et un rotor de cette voilure tournante.

Un aéronef à voilure tournante comporte généralement au moins un rotor de sustentation voire de propulsion. Ce rotor de sustentation inclut un moyeu portant une pluralité de pales.

Le rotor peut alors comporter une butée lamifiée par pale pour articuler chaque pale au moyeu selon un axe de battement, un axe de traînée et un axe de variation de pas. Ainsi, chaque butée lamifiée assure la retenue et l'articulation d'une pale sur le moyeu d'un rotor de giravion.

Le document FR 2 497 173 présente une butée lamifiée comprenant un empilement de couches alternées de matière souple et d'un matériau rigide.

Ce document FR 2 497 173 vise à limiter l'usure en fatigue d'une butée en prévoyant des couches de matière souple en forme de calotte sphérique dont les épaisseurs croissent radialement et progressivement le long d'un axe de symétrie en allant d'une armature intérieure vers une armature extérieure.

Par ailleurs, un rotor d'un aéronef à voilure tournante peut comprendre un dispositif pour éviter les phénomènes de résonance sol et air.

Un tel dispositif comprend classiquement un amortisseur de traînée reliant chaque pale au moyeu ou à une pale adjacente, cet amortisseur apportant une raideur et un amortissement au mode de vibration en traînée du rotor. Un tel amortisseur est parfois dénommé « adaptateur de fréquences ».

Le document US 5 449 152 présente des amortisseurs de traînée tubulaires. Notamment, ce document US 5 449 152 divulgue un amortisseur de traînée muni de couches d'élastomères ayant des caractéristiques différentes.

Le document US 4 886 419 propose une butée lamifiée pour d'une part articuler une pale à un moyeu et d'autre part amortir les mouvements en traînée de cette pale.

Cette butée comporte alors une armature intérieure et une armature extérieure, un empilement de couches principales souples et de couches secondaires rigides étant disposé entre l'armature intérieure et l'armature extérieure.

Chaque couche principale comporte alors deux matériaux différents.

Le document US 5 913 659 présente un dispositif muni d'un amortisseur élastomérique plat et d'un amortisseur élastomérique sphérique.

On connaît aussi les documents GB 660560, US 2003/235499, WO 2010/068209, EP 187265 et US 2958526.

Le document le plus proche GB 660560 présente un dispositif pour relier deux organes. Ce dispositif comporte, selon une réalisation, trois tubes concentriques (1, 2, 3) représentant un tube central (1), un tube intermédiaire (2) et un tube externe (3).

Une première couche de caoutchouc est disposée entre le tube central et le tube intermédiaire, et une deuxième couche de caoutchouc est disposée entre le tube intermédiaire et le tube externe.

La première couche inclut deux secteurs collés au tube central et au tube intermédiaire, ces secteurs étant reliés par des portions circonférentielles collées au tube intermédiaire.

De même, la deuxième couche inclut deux secteurs collés au tube externe et au tube intermédiaire, ces secteurs étant reliés par des portions circonférentielles collées au tube intermédiaire.

Le document GB 660560 ne présente donc pas une butée lamifiée pour d'une part retenir et articuler une pale à un moyeu, et pour d'autre part adapter le mode de vibration en traînée d'un rotor.

La présente invention a alors pour objet une butée lamifiée pour d'une part retenir et articuler une pale à un moyeu, et pour d'autre part adapter le mode de vibration en traînée d'un rotor.

Selon l'invention, une butée lamifiée et notamment une butée lamifiée d'un rotor d'aéronef comprend une armature intérieure et une armature extérieure, la butée comprenant un organe élastomérique comportant un empilement de couches principales et de couches secondaires, chaque couche principale comportant un unique matériau souple et chaque couche secondaire comportant un unique matériau rigide. Chaque couche secondaire adhère à chaque couche principale adjacente.

Dès lors, cette butée ne présente pas de zones vides entre une couche rigide et une couche souple, contrairement au document GB 660 560 qui prévoit des sections circonférentielles n'adhérant pas à des couches rigides adjacentes.

On comprend que les termes relatifs « souple » et « rigide » permettent d'identifier clairement les couches principales et secondaires.

Dès lors, une armature peut effectuer un mouvement rotatif par rapport à l'autre armature autour d'un axe de battement ainsi qu'autour d'un axe de traînée et d'un axe de variation de pas, l'axe de battement et l'axe de variation de pas ayant en commun un centre géométrique, l'axe de variation de pas et l'axe de battement définissant conjointement un plan de traînée, l'axe de variation de pas et l'axe de traînée définissant conjointement un plan de battement, l'axe de traînée et l'axe de battement définissant conjointement un plan de variation de l'angle de pas.

De plus, la butée lamifiée est notamment remarquable en ce que l'empilement comporte au moins une première couche principale et au moins une deuxième couche principale, chaque première couche principale présentant dans ledit plan de traînée une première épaisseur variant entre une première épaisseur minimale au niveau de l'axe de variation de pas et une première épaisseur maximale au niveau de l'axe de battement, chaque deuxième couche principale présentant dans ledit plan de traînée une deuxième épaisseur variant entre une deuxième épaisseur minimale au niveau de l'axe de battement et une deuxième épaisseur maximale au niveau de l'axe de variation de pas , l'épaisseur de chaque couche principale étant constante dans le plan de battement et dans le plan de variation de l'angle de pas.

On entend par « épaisseur » d'une couche dans un plan, la dimension de cette couche selon une direction passant par le centre géométrique entre deux couches secondaires, ou entre une couche secondaire et une armature.

Ainsi, lorsqu'une armature effectue un mouvement rotatif autour de l'axe de traînée par rapport à l'autre armature, les zones ayant une épaisseur minimale et les zones ayant une épaisseur maximale de chaque couche principale sont sollicitées en série.

Chaque couche principale présente alors une raideur et un amortissement élevés lors d'un mouvement en traînée d'une pale.

Dès lors, la butée présente une raideur et un amortissement élevés en traînée permettant d'adapter le mode de vibration en traînée d'un rotor muni de cette butée. On détermine les épaisseurs et notamment les épaisseurs minimales pour obtenir la raideur et l'amortissement en trainée souhaités.

A l'inverse, lorsque qu'une armature effectue un mouvement rotatif autour de l'axe de battement ou de l'axe de variation de pas par rapport à l'autre armature, on sollicite au moins une couche principale au niveau d'une zone présentant une épaisseur minimale.

En effet, chaque première couche principale ou chaque deuxième couche principale est toujours sollicitée durant un mouvement en battement ou en pas dans une zone présentant une épaisseur minimale.

En particulier, l'épaisseur de chaque couche principale étant constante dans le plan de battement et dans le plan de variation de l'angle de pas, chaque première couche principale présente une première épaisseur minimale dans le plan de battement, chaque deuxième couche principale présentant une deuxième épaisseur maximale dans ce plan de battement.

Ainsi, la deuxième épaisseur maximale des deuxièmes couches principales induit une raideur et un amortissement en battement faibles.

De même, l'épaisseur de chaque couche principale étant constante dans le plan de battement et dans le plan de variation de l'angle de pas, chaque première couche principale présente une première épaisseur maximale dans le plan de variation de l'angle de pas, chaque deuxième couche principale présentant une deuxième épaisseur minimale dans ce plan de variation de l'angle de pas.

La première épaisseur maximale des premières couches principales induit une raideur et un amortissement en battement faibles.

La butée présente alors une raideur et un amortissement faibles lors d'un mouvement en pas ou en battement d'une armature par rapport à l'autre. Cette raideur et cet amortissement faibles permettent de minimiser l'introduction d'efforts non souhaités et néfastes au fonctionnement du rotor lors d'un mouvement en pas ou en battement.

De plus, la butée présente une raideur et un amortissement élevés lors d'un mouvement en traînée pour minimiser les risques d'apparition d'un phénomène de résonances sol ou air.

On note que la fonction adaptation de fréquence est obtenue de fait à l'aide d'un équipement, à savoir une butée lamifiée disposée entre la pale et le moyeu. Cette implantation présente l'avantage d'éviter l'apparition d'un mouvement collectif non contré des pales induisant l'utilisation de moyens d'arrêt limitant le déplacement des pales au démarrage ou à l'arrêt du rotor. De plus, cette implantation tend à éviter l'apparition d'un phénomène de résonances en mode collectif difficilement amorti par des adaptateurs de fréquence interpales de l'état de la technique.

Une telle butée lamifiée permet alors de remplir le rôle d'une butée lamifiée classique et d'un adaptateur de fréquences.

Cette butée lamifiée reste cependant simple à réaliser dans la mesure où chaque couche principale est munie d'un unique matériau, contrairement à l'enseignement du document US 4 886 419. En effet, les caractéristiques de raideur et d'amortissement varient en fonction du mouvement des armatures en raison de la géométrie particulière des couches principales.

A titre d'exemple, chaque couche principale peut comporter un module élastique de cisaillement supérieur ou égal à 0,1 MPa (Megapascal) et inférieur 10 MPa, un amortissement supérieur ou égal à 0,1 MPa (Megapascal) et une épaisseur variant entre 1 millimètre et 10 millimètres.

Chaque couche secondaire, dans l'hypothèse d'une réalisation dans un matériau métallique, peut comporter un module élastique de cisaillement supérieur ou égal à 80000 MPa (Megapascal), et une épaisseur de l'ordre du dixième de millimètres.

La butée lamifié peut de plus comporter une ou plusieurs des caractéristiques additionnelles qui suivent.

Selon une réalisation, un premier sous-ensemble d'au moins une première couche principale est agencé entre l'armature intérieure et un deuxième sous-ensemble d'au moins une deuxième couche principale, le deuxième sous-ensemble étant agencé entre le premier sous-ensemble et l'armature extérieure, le premier sous-ensemble et le deuxième sous-ensemble comprenant une couche secondaire commune.

On comprend que les armatures extérieure et intérieure sont assimilables à des couches secondaires rigides.

De plus, le premier sous-ensemble et le deuxième sous-ensemble présentent une couche secondaire commune, cette couche secondaire commune séparant une première couche principale du premier sous-ensemble d'une deuxième couche principale du deuxième sous-ensemble.

Selon une variante alternative, chaque couche secondaire disposée entre l'armature intérieure et l'armature extérieure est agencée entre une première couche principale et une deuxième couche principale.

Dès lors, l'empilement peut comporter successivement une alternance d'une première couche principale adjacente à une deuxième couche principale.

La fabrication de la butée est alors facilitée.

Selon un autre aspect, le matériau souple des couches principales peut appartenir au groupe des élastomères.

Le matériau rigide des couches secondaires peut en outre appartenir au groupe qui comprend les métaux et les matières plastiques armées.

Par ailleurs, la butée lamifiée est disposée entre une pale et un moyeu pour notamment assurer l'articulation de cette pale au moyeu.

Dès lors, l'armature extérieure comporte éventuellement un moyen de liaison à une pale.

De plus, l'armature intérieure peut comporter un moyen de fixation à un moyeu.

Selon un autre aspect, chaque couche principale et chaque couche secondaire peuvent présenter dans le plan de traînée une première symétrie par rapport à l'axe de variation de pas.

De plus, chaque couche principale et chaque couche secondaire peuvent présenter dans le plan de traînée une deuxième symétrie par rapport à l'axe de battement.

Par conséquent, selon une première réalisation chaque couche principale et chaque couche secondaire présentent uniquement dans le plan de traînée une première symétrie par rapport à l'axe de variation de pas.

Selon une deuxième réalisation chaque couche principale et chaque couche secondaire présentent dans le plan de traînée une première symétrie par rapport à l'axe de variation de pas et une deuxième symétrie par rapport à l'axe de battement.

Par ailleurs, on note que chaque couche secondaire présente éventuellement une troisième épaisseur constante dans le plan de battement, le plan de traînée et le plan de variation de l'angle de pas.

Selon une autre variante, au moins une couche secondaire a une troisième épaisseur variable, l'épaisseur d'une sous-partie incluant la couche secondaire à troisième épaisseur variable et d'une couche principale adjacente à cette couche secondaire étant constante.

La fabrication de la butée s'en trouve alors facilitée.

Selon un autre aspect, l'axe de battement, l'axe de variation de pas et l'axe de traînée peuvent se couper au centre géométrique.

Toutefois, selon une variante visant à optimiser l'amortissement en traînée, l'axe de traînée peut être décalé par rapport au centre géométrique.

Par ailleurs, la première épaisseur peut varier continûment entre ladite première épaisseur minimale et ladite épaisseur maximale, ladite deuxième épaisseur variant continument entre ladite deuxième épaisseur minimale et ladite deuxième épaisseur maximale au niveau de l'axe de variation de pas.

On entend par variation continue une variation progressive voire linéaire de l'épaisseur.

Cette variation continue optimise l'amortissement des mouvements relatifs entre les armatures.

Outre une butée lamifiée, l'invention vise un rotor muni d'une telle butée.

Selon l'invention, un rotor est muni d'un moyeu et d'une pluralité de pales, chaque pale étant reliée au moyeu par une butée lamifiée comprenant une armature intérieure et une armature extérieure, ladite butée comprenant un organe élastomérique comportant un empilement de couches principales et de couches secondaires, chaque couche principale comportant un unique matériau souple et chaque couche secondaire comportant un unique matériau rigide. Une armature peut effectuer un mouvement rotatif par rapport à l'autre armature autour d'un axe de battement de la pale ainsi qu'autour d'un axe de traînée et d'un axe de variation de pas de cette pale, ledit axe de battement et ledit axe de variation de pas ayant en commun un centre géométrique, ledit axe de variation de pas et ledit axe de battement définissant conjointement un plan de traînée, ledit axe de variation de pas et ledit axe de traînée définissant conjointement un plan de battement, ledit axe de traînée et ledit axe de battement définissant conjointement un plan de variation de l'angle de pas.

Ladite butée est telle que décrite précédemment selon l'invention.

Chaque pale est avantageusement articulée au moyeu par une butée lamifiée selon l'invention.

Outre une butée lamifiée et un rotor, l'invention vise aussi un aéronef muni d'un tel rotor.

L'invention et ses avantages apparaîtront avec plus de détails dans le cadre de la description qui suit avec des exemples de réalisation donnés à titre illustratif en référence aux figures annexées qui représentent :
- la figure 1, un aéronef muni d'un rotor comprenant des butées lamifiées selon un premier mode de réalisation,
- la figure 2, une coupe d'une butée lamifiée dans un plan de traînée selon un premier mode de réalisation,
- la figure 3, une coupe d'une butée lamifiée dans un plan de battement selon un premier mode de réalisation,
- la figure 4, une coupe d'une butée lamifiée dans un plan de variation de l'angle de pas selon un premier mode de réalisation,
- la figure 5, une coupe montrant une butée lamifiée selon un deuxième mode de réalisation, et
- la figure 6, une variante optimisant la fabrication de la butée.

Les éléments présents dans plusieurs figures distinctes sont affectés d'une seule et même référence.

On note que trois directions AXTRA, AXBAT et AXPAS orthogonales les unes par rapport sont associées à chaque butée lamifiée représentée et à la pale correspondante.

La direction AXTRA est dénommée « axe de traînée », cette direction correspondant à l'axe de traînée des pales associées.

Une autre direction AXTBAT est dénommée « axe de battement », cette direction correspondant à l'axe de battement des pales associées.

Enfin, la direction AXPAS est dénommée « axe de variation de pas », cette direction correspondant à l'axe de variation de pas des pales associées.

On note que les axes de traînée AXTRA, de battement AXBAT et de variation de pas AXPAS forment un référentiel de chaque butée lamifiée et de la pale associée, ces axes de traînée AXTRA, de battement AXBAT et de variation de pas AXPAS se coupent en un centre géométrique CTR.

Cependant, selon une variante non représentée l'axe de traînée AXTRA peut être décalé par rapport au centre géométrique CTR pour optimiser la fonction amortissement de traînée. Néanmoins l'axe de trainée reste concourant avec l'axe de pas.

De plus, au regard d'une butée lamifiée et de la pale associée, l'axe de variation de pas AXPAS et l'axe de battement AXBAT définissent conjointement un plan de traînée PTRA de la pale, l'axe de variation de pas AXPAS et l'axe de traînée AXTRA définissant conjointement un plan de battement PBAT de la pale, l'axe de traînée AXTRA et l'axe de battement AXBAT définissant conjointement un plan de variation de l'angle de pas PPAS.

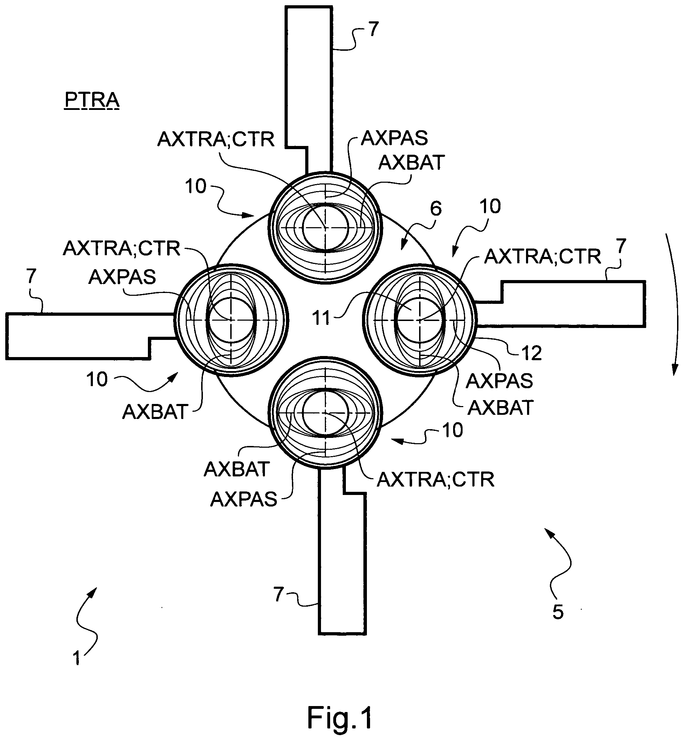

La figure 1 présente un aéronef muni d'un rotor 5. Il est à noter que les équipements de l'aéronef 1 n'appartenant pas au rotor 5 ne sont pas schématisés pour ne pas alourdir inutilement la figure.

Le rotor 5 comporte une pluralité de pales 7 portées par un moyeu 6. Chaque pale 7 est retenue et articulée à ce moyeu 6 par une butée lamifiée, et favorablement par une butée lamifiée selon l'invention.

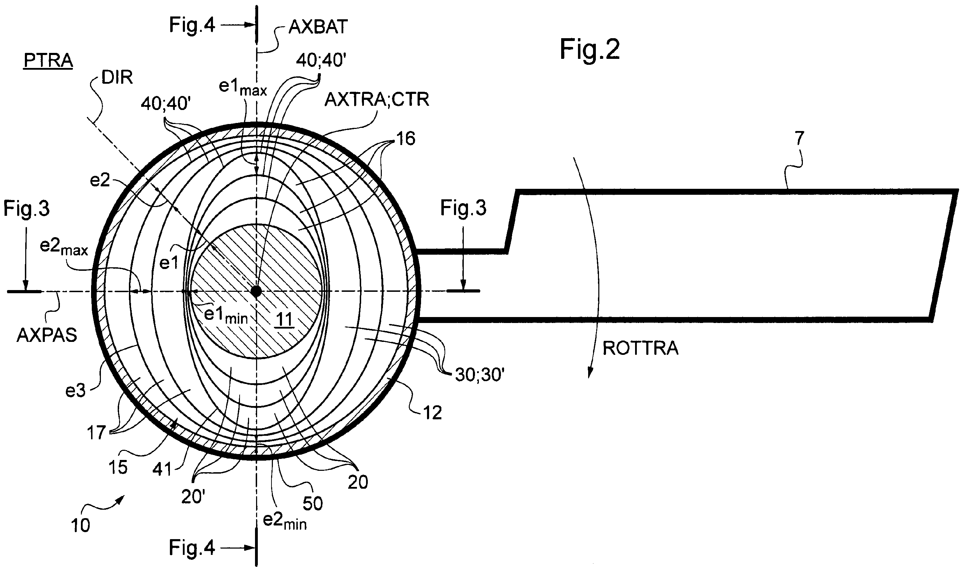

La figure 2 présente une coupe dans le plan de traînée PTRA d'une butée 10 lamifiée selon un premier mode de réalisation.

Indépendamment du mode de réalisation, la butée 10 lamifiée comporte une armature intérieure 11 et une armature extérieure 12 enserrant un organe élastomérique 15.

Une armature est alors solidarisée au moyeu du rotor, alors que l'autre armature est solidarisée à une pale. Par exemple, l'armature intérieure 11 est fixée au moyeu 6 par un moyen de fixation non représenté, l'armature extérieure 12 étant fixée par un moyen de liaison 50 à une pale 7.

Dès lors, l'organe élastomérique autorise des rotations relatives entre l'armature intérieure 11 et l'armature extérieure 12. Plus particulièrement une armature peut effectuer par rapport à l'autre armature des rotations ROTTRA, ROTBAT, ROTPAS autour des axes de traînée AXTRA, de battement AXBAT et de variation de pas AXPAS.

Par suite, selon la réalisation représentée, l'armature extérieure 12 et la pale 7 associée peuvent effectuer des rotations ROTTRA, ROTBAT, ROTPAS autour respectivement des axes de traînée AXTRA, de battement AXBAT et de variation de pas AXPAS par rapport à l'armature intérieure 11.

L'organe élastomérique 15 comporte un empilement de couches principales 20, 30 et de couches secondaires 40.

L'empilement peut comporter une unique première couche principale et une unique deuxième couche principale. Cependant, l'exemple représenté comporte une pluralité de premières couches principales et de deuxièmes couches principales.

Chaque couche principale 20, 30 est alors solidarisée à deux couches secondaires 40 qui l'enserrent, les armatures intérieure 11 et extérieure 12 pouvant représenter des couches secondaires extrémales.

Chaque première couche principale 20 et chaque deuxième couche principale 30 sont réalisées à partir d'un unique matériau souple 20', 30'. Eventuellement, deux couches principales distinctes peuvent respectivement comporter deux matériaux souples distincts.

Le matériau souple 20', 30' de chaque couche principale appartient par exemple au groupe des élastomères.

Chaque couche secondaire 40 est à l'inverse réalisée à partir d'un unique matériau rigide 40'. Eventuellement, deux couches secondaires distinctes peuvent respectivement comporter deux matériaux rigides distincts.

Le matériau souple 20', 30' de chaque couche principale appartient par exemple au groupe comprenant les métaux et les matières plastiques armées.

Dès lors, selon la variante représentée sur les figures 1 à 5, l'empilement de couches principales et de couches secondaires comporte un premier sous-ensemble 16 d'empilement de premières couches principales 20 et de deuxième couches secondaires 40, ainsi qu'un deuxième sous-ensemble 17 d'empilement de couches principales 30 et de couches secondaires 40.

Par exemple, le premier sous-ensemble 16 est agencé entre l'armature intérieure 11 et le deuxième sous-ensemble 17. Le deuxième sous-ensemble 17 est alors agencé entre le premier sous-ensemble 16 et l'armature extérieure 12.

Le premier sous-ensemble 16 et le deuxième sous-ensemble 17 comprennent alors une couche secondaire commune 41.

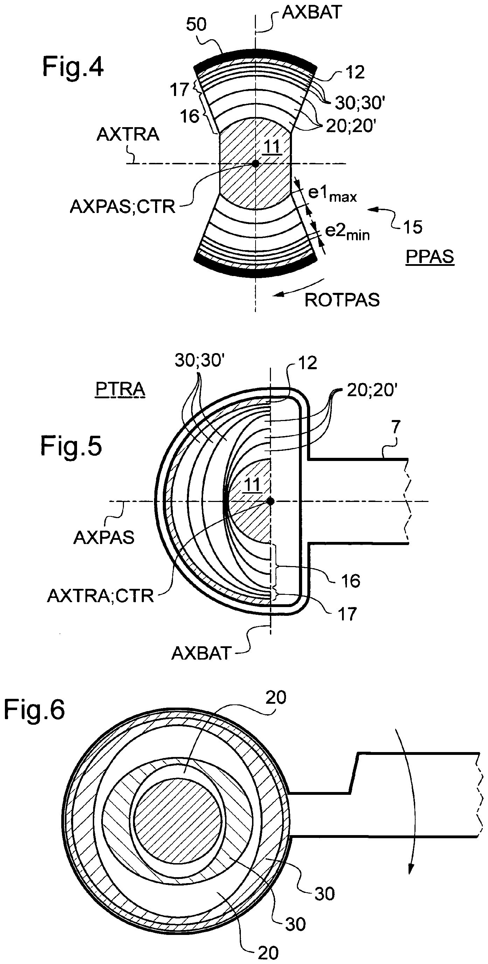

Selon la variante de la figure 6, on alterne l'agencement d'une première couche principale avec l'agencement d'une deuxième couche principale.

Par suite, chaque couche secondaire disposée entre l'armature intérieure et l'armature extérieure est de fait agencée entre une première couche principale et une deuxième couche principale.

Indépendamment de la variante, chaque couche principale présente ainsi dans le plan de traînée une épaisseur variable, la première loi de variation d'épaisseur des premières couches principales 20 étant opposée à la deuxième loi de variation d'épaisseur des deuxièmes couches principales 30.

On rappelle que l'on entend par épaisseur la dimension des couches étudiées dans un plan selon une direction DIR passant par le centre géométrique CTR.

L'épaisseur de chaque couche principale varie alors angulairement dans le plan de traînée, à savoir selon une rotation de la direction DIR autour de l'axe de traînée AXTRA.

Par suite, chaque première couche principale 20 comporte dans le plan de traînée PTRA une première épaisseur e1 variant entre une première épaisseur minimale e1MIN au niveau de l'axe de variation de pas AXPAS et une première épaisseur maximale e1MAX au niveau de l'axe de battement AXBAT, éventuellement cycliquement est linéairement. La variation de la première épaisseur peut être continue.

Toutes les premières couches principales 20 peuvent avoir une même épaisseur, et notamment une même première épaisseur minimale e1MIN et une même première épaisseur maximale e1max.

Selon une autre variante, les premières épaisseurs minimales e1MIN et les premières épaisseurs maximales e1max peuvent croître en s'éloignant de l'armature intérieure 11.

D'autres variantes sont éventuellement envisageables.

A l'inverse, chaque deuxième couche principale 30 comporte dans le plan de traînée PTRA une deuxième épaisseur e2 variant entre une deuxième épaisseur maximale e2MAX au niveau de l'axe de variation de pas AXPAS et une deuxième épaisseur minimale e2MIN au niveau de l'axe de battement AXBAT, éventuellement cycliquement est linéairement. La variation de la deuxième épaisseur peut être continue.

Toutes les deuxièmes couches principales 30 peuvent avoir une même épaisseur, et notamment une même deuxième épaisseur minimale e2MIN et une même deuxième épaisseur maximale e2max.

Selon une autre variante, les deuxièmes épaisseurs minimales e2MIN et les deuxièmes épaisseurs maximales e2max peuvent croître en s'éloignant de l'armature intérieure 11.

D'autres variantes sont éventuellement envisageables.

Dès lors, lorsque la pale 7 attachée à la butée 10 effectue une rotation en traînée ROTTRA, chaque zone des couches principales présentant une épaisseur minimale et chaque zone des couches principales présentant une épaisseur maximale sont sollicitées.

Dès lors, la butée 10 présente une raideur et un amortissement en traînée élevées, par exemple et pour une certaine gamme d'aéronefs supérieurs à 100 000 N.m / rad. La butée 10 a alors une influence sur le mode de vibration en traînée du rotor de manière à au moins réduire les risques d'apparition d'un phénomène de résonance sol ou air.

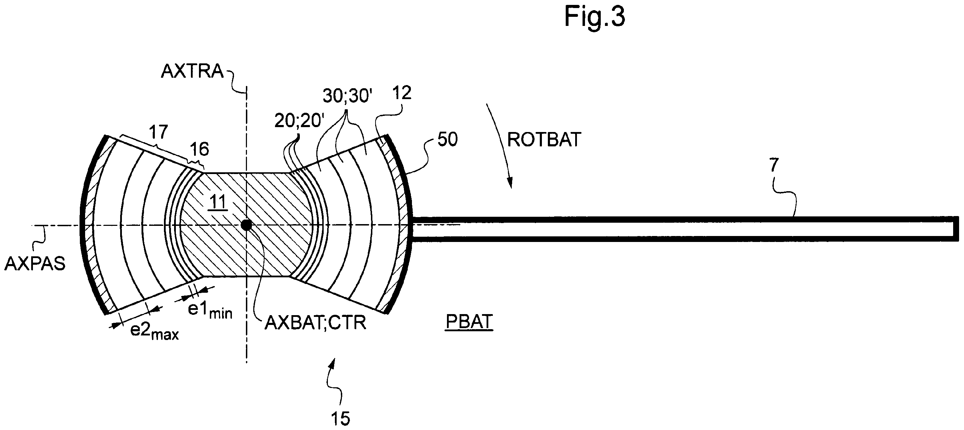

Par contre, en référence aux figures 3 et 4, l'épaisseur de chaque première et deuxième couche principale 20, 30 est constante dans le plan de battement PBAT et dans le plan de variation de l'angle de pas PPAS.

La figure 3 présente ainsi des premières couches principales 20 comportant une première épaisseur minimale e1MIN, et des deuxièmes couches principales 30 comportant une deuxième épaisseur maximale e2MAX.

Dès lors, la butée 10 présente une raideur et un amortissement en battement faibles qui sont induits par les premières couches principales 20 lorsque la pale 7 effectue une rotation en battement ROTBAT.

De même, la figure 4 présente ainsi des premières couches principales 20 comportant une première épaisseur maximale e1MAX, et des deuxièmes couches principales 30 comportant une deuxième épaisseur minimale e2MIN.

Dès lors, la butée 10 présente une raideur et un amortissement en pas faibles qui sont induits par les deuxièmes couches principales 30 lorsque la pale 7 effectue une rotation en pas ROTPAS.

Par ailleurs, en référence aux figures 2 à 4, on note que chaque couche secondaire 40 présente une troisième épaisseur e3 constante notamment dans le plan de battement PBAT, le plan de traînée PTRA et le plan de variation de l'angle de pas PPAS.

Selon un autre aspect et selon le premier mode de réalisation des figures 2 à 4, l'organe élastomérique 15 peut présenter une symétrie par rapport au plan de battement PBAT, au plan de traînée PTRA et au plan de variation de l'angle de pas PPAS.

Par contre, selon le deuxième mode de réalisation, l'organe élastomérique 15 peut présenter une symétrie par rapport au plan de battement PBAT voire au plan de traînée PTRA.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Butée (10) lamifiée comprenant une armature intérieure (11) et une armature extérieure (12), ladite butée (10) comprenant un organe élastomérique (15) comportant un empilement de couches principales (20, 30) et de couches secondaires (40), chaque couche principale (20, 30) comportant un unique matériau souple (20',30') et chaque couche secondaire (40) comportant un unique matériau rigide (40"), une armature (12) pouvant effectuer un mouvement rotatif (ROTBAT, ROTTRA, ROTPAS) par rapport à l'autre armature (11) autour d'un axe de battement (AXBAT) ainsi qu'autour d'un axe de traînée (AXTRA) et d'un axe de variation de pas (AXPAS), ledit axe de battement (AXBAT) et ledit axe de variation de pas (AXPAS) ayant en commun un centre géométrique (CTR), ledit axe de variation de pas (AXPAS) et ledit axe de battement (AXBAT) définissant conjointement un plan de traînée (PTRA), ledit axe de variation de pas (AXPAS) et ledit axe de traînée (AXTRA) définissant conjointement un plan de battement (PBAT), ledit axe de traînée (AXTRA) et ledit axe de battement (AXBAT) définissant conjointement un plan de variation de l'angle de pas (PPAS), chaque couche secondaire adhérant à chaque couche principale adjacente,
ledit empilement comportant au moins une première couche principale (20) et au moins une deuxième couche principale (30), chaque première couche principale (20) présentant dans ledit plan de traînée (PTRA) une première épaisseur (e1) variant entre une première épaisseur minimale (e1MIN) au niveau de l'axe de variation de pas (AXPAS) et une première épaisseur maximale (e1MAX) au niveau de l'axe de battement (AXBAT), chaque deuxième couche principale (30) présentant dans ledit plan de traînée (PTRA) une deuxième épaisseur (e2) variant entre une deuxième épaisseur minimale (e2min) au niveau de l'axe de battement (AXBAT) et une deuxième épaisseur maximale (e2max) au niveau de l'axe de variation de pas (AXPAS), l'épaisseur (e1, e2) de chaque couche principale (20, 30) étant constante dans le plan de battement (PBAT) et dans le plan de variation de l'angle de pas (PPAS), **caractérisée en ce que** ladite butée ne présente pas de zone vide entre une couche principale et une couche secondaire.

2. Butée lamifiée selon la revendication 1,
**caractérisée en ce que** la butée lamifiée comporte un premier sous-ensemble (16) d'au moins une première couche principale qui est agencé entre l'armature intérieure (11) et un deuxième sous-ensemble (17) d'au moins une deuxième couche principale, ledit deuxième sous-ensemble (17) étant agencé entre ledit premier sous-ensemble (16) et l'armature extérieure (12), le premier sous-ensemble (16) et le deuxième sous-ensemble (17) comprenant une couche secondaire commune (41).

3. Butée lamifiée selon l'une quelconque des revendications 1 à 2,
**caractérisée en ce que** le matériau souple (20', 30') des couches principales (20, 30) appartient au groupe des élastomères.

4. Butée lamifiée selon l'une quelconque des revendications 1 à 3,
**caractérisée en ce que** le matériau rigide (40') des couches secondaires (40) appartient au groupe qui comprend les métaux et les matières plastiques armées.

5. Butée lamifiée selon l'une quelconque des revendications 1 à 4,
**caractérisée en ce que** ladite armature extérieure (12) comporte un moyen de liaison (50) à une pale (7).

6. Butée lamifiée selon l'une quelconque des revendications 1 à 5,
**caractérisée en ce que** ladite armature intérieure (11) comporte un moyen de fixation à un moyeu (6).

7. Butée lamifiée selon l'une quelconque des revendications 1 à 6,
**caractérisée en ce que** chaque couche principale (20, 30) et chaque couche secondaire (40) présentent dans le plan de traînée (PTRA) une première symétrie par rapport à l'axe de variation de pas (AXPAS).

8. Butée lamifiée selon la revendication 7,
**caractérisée en ce que** chaque couche principale (20, 30) et chaque couche secondaire (40) présentent dans le plan de traînée (PTRA) une deuxième symétrie par rapport à l'axe de battement (AXBAT).

9. Butée lamifiée selon l'une quelconque des revendications 1 à 8,
**caractérisée en ce que** chaque couche secondaire (40) présente une troisième épaisseur (e3) constante dans le plan de battement (PBAT), le plan de traînée (PTRA) et le plan de variation de l'angle de pas (PPAS).

10. Butée lamifiée selon l'une quelconque des revendications 1 à 8,
**caractérisée en ce qu'**au moins une couche secondaire a une troisième épaisseur variable, l'épaisseur d'une sous-partie incluant ladite couche secondaire à troisième épaisseur variable et d'une couche principale adjacente à cette couche secondaire étant constante.

11. Butée lamifiée selon la revendication 1,
**caractérisée en ce que** chaque couche secondaire disposée entre l'armature intérieure et l'armature extérieure est agencée entre une première couche principale et une deuxième couche principale.

12. Butée lamifiée selon la revendication 1,
**caractérisée en ce que** ledit axe de traînée AXTRA est décalé par rapport au centre géométrique (CTR).

13. Butée lamifiée selon la revendication 1,
**caractérisée en ce que** ladite première épaisseur (e1) varie continûment entre ladite première épaisseur minimale (e1MIN) et ladite épaisseur maximale (e1MAX)), ladite deuxième épaisseur (e2) variant continûment entre ladite deuxième épaisseur minimale (e2min) et ladite deuxième épaisseur maximale (e2max) au niveau de l'axe de variation de pas (AXPAS).

14. Rotor (5) muni d'un moyeu (6) et d'une pluralité de pales (7), chaque pale (7) étant reliée au moyeu (6) par une butée (10) lamifiée comprenant une armature intérieure (11) et une armature extérieure (12), ladite butée (10) comprenant un organe élastomérique (15) comportant un empilement de couches principales (20, 30) et de couches secondaires (40), chaque couche principale (20, 30) comportant un unique matériau souple (20', 30') et chaque couche secondaire (40) comportant un unique matériau rigide (40'), une armature(11) pouvant effectuer un mouvement rotatif (ROTBAT, ROTTRA, ROTPAS) par rapport à l'autre armature (12) autour d'un axe de battement (AXBAT) de la pale (10) ainsi qu'autour d'un axe de traînée (AXTRA) et d'un axe de variation de pas (AXPAS) de cette pale (10), ledit axe de battement (AXBAT) et ledit axe de variation de pas (AXPAS) ayant en commun un centre géométrique (CTR), ledit axe de variation de pas (AXPAS) et ledit axe de battement (AXBAT) définissant conjointement un plan de traînée (PTRA), ledit axe de variation de pas (AXPAS) et ledit axe de traînée (AXTRA) définissant conjointement un plan de battement (PBAT), ledit axe de traînée (AXTRA) et ledit axe de battement (AXBAT) définissant conjointement un plan de variation de l'angle de pas (PPAS),
**caractérisée en ce que** ladite butée (10) est selon l'une quelconque des revendications 1 à 13.

15. Aéronef (1),
**caractérisée en ce qu'**il comporte un rotor (5) selon la revendication 14.

## Patentansprüche

1. Schichtlager (10) mit einer inneren Armierung (11) und einer äußeren Armierung (12), wobei das Lager (10) ein elastomeres Element (15) aufweist mit einem Stapel von Hauptschichten (20, 30) und Nebenschichten (40), wobei jede Hauptschicht (20, 30) ein einziges weiches Material (20', 30') und jede Nebenschicht (40) ein einziges steifes Material (40") aufweist, wobei eine Armierung (12) eine Drehbewegung (ROTBAT, ROTTRA, ROTPAS) relativ zu einer anderen Armierung (11) um eine Schlagachse (AXBAT) sowie um eine LuftLuftwiderstandsachse (AXTRA) und um eine Achse der Veränderung des Rotorblattverstellwinkels (AXPAS) ausführen kann, wobei die Schlagachse (AXBAT) und die Achse der Veränderung des Rotorblattverstellwinkels (AXPAS) ein geometrisches Zentrum (CTR) aufweisen, wobei die Achse der Veränderung des Rotorblattverstellwinkels (AXPAS) und die Schlagachse (AXBAT) zusammen eine Luftwiderstandsebene (PTRA) definieren, wobei die Achse der Veränderung des Rotorblattverstellwinkels (AXPAS) und die Luftwiderstandsachse (AXTRA) gemeinsam eine Schlagebene (PBAT) definieren, wobei die Luftwiderstandsachse (AXTRA) und die Schlagachse (AXBAT) gemeinsam eine Ebene der Veränderung des Rotorblattverstellwinkels (PPAS) definieren, wobei jede Nebenschicht an jeder benachbarten Hauptschicht klebt, wobei der Stapel mindestens eine erste Hauptschicht (20) und mindestens eine zweite Hauptschicht (30) aufweist, wobei jede erste Hauptschicht (20) in der Luftwiderstandsebene (PTRA) eine erste Dicke (e1) aufweist, die sich zwischen einer ersten minimalen Dicke (e1MIN) auf der Höhe der Achse der Veränderung des Rotorblattverstellwinkels (AXPAS) und einer ersten maximalen Dicke (e1MAX) auf der Höhe der Schlagachse (AXBAT) ändert, wobei jede zweite Hauptschicht (30) in der Luftwiderstandsebene (PTRA) eine zweite Dicke (e2) aufweist, die sich zwischen einer zweiten minimalen Dicke (e2min) auf der Höhe der Schlagachse (AXBAT) und einer zweiten maximalen Dicke (e2max) auf der Höhe der Achse der Veränderung der Rotorblattverstellwinkels (AXPAS) ändert, wobei die Dicke (e1, e2) einer jeden Hauptschicht (20, 30) in der Schlagebene (PBAT) und in der Ebene der Veränderung des Rotorblattverstellwinkels (PPAS) konstant ist, **dadurch gekennzeichnet, dass** das Lager zwischen einer Hauptschicht und einer Nebenschicht keinen leeren Bereich aufweist.

2. Schichtlager nach Anspruch 1,
**dadurch gekennzeichnet, dass** das Schichtlager eine erste Untergruppe (16) aus mindestens einer ersten Hauptschicht, die zwischen der inneren Armierung (11) und einer zweiten Untergruppe (17) aus mindestens einer zweiten Hauptschicht angeordnet ist, aufweist, wobei die zweite Untergruppe (17) zwischen der ersten Untergruppe (16) und der äußeren Armierung (12) angeordnet ist, wobei die erste Untergruppe (16) und die zweite Untergruppe (17) eine gemeinsame Nebenschicht (41) aufweisen.

3. Schichtlager nach einem der Ansprüche 1 bis 2,
**dadurch gekennzeichnet, dass** das weiche Material (20', 30') der Hauptschichten (20, 30) zu der Gruppe der Elastomere gehört.

4. Schichtlager nach einem der Ansprüche 1 bis 3,
**dadurch gekennzeichnet, dass** das steife Material (40') der Nebenschicht (40) zu der Gruppe gehört, die Metalle und faserverstärkte Kunststoffe enthält.

5. Schichtlager nach einem der Ansprüche 1 bis 4,
**dadurch gekennzeichnet, dass** die äußere Armierung (12) ein Mittel (50) zur Verbindung mit einem Rotorblatt (7) aufweist.

6. Schichtlager nach einem der Ansprüche 1 bis 5,
**dadurch gekennzeichnet, dass** die innere Armierung (11) ein Mittel zur Befestigung an einer Nabe (6) aufweist.

7. Schichtlager nach einem der Ansprüche 1 bis 6,
**dadurch gekennzeichnet, dass** jede Hauptschicht (20, 30) und jede Nebenschicht (40) in der Luftwiderstandsebene (PTRA) eine erste Symmetrie bezüglich der Achse der Veränderung des Rotorblattverstellwinkels (AXPAS) aufweist.

8. Schichtlager nach Anspruch 7,
**dadurch gekennzeichnet, dass** jede Hauptschicht (20, 30) und jede Nebenschicht (40) in der Luftwiderstandsebene (PTRA) eine zweite Symmetrie bezüglich der Schlagachse (AXBAT) aufweist.

9. Schichtlager nach einem der Ansprüche 1 bis 8,
**dadurch gekennzeichnet, dass** jede Nebenschicht (40) eine dritte Dicke (e3) aufweist, die in der Schlagebene (PBAT), in der Luftwiderstandsebene (PTRA) und in der Ebene der Veränderung des Rotorblattverstellwinkels (PPAS) konstant ist.

10. Schichtlager nach einem der Ansprüche 1 bis 8,
**dadurch gekennzeichnet, dass** mindestens eine Nebenschicht eine dritte veränderliche Dicke aufweist, wobei die Dicke eines Unterabschnitts, der die Nebenschicht mit der dritten veränderlichen Dicke und eine zu dieser Nebenschicht benachbarte Hauptschicht umfasst, konstant ist.

11. Schichtlager nach Anspruch 1,
**dadurch gekennzeichnet, dass** jede Nebenschicht, die zwischen der inneren Armierung und der äußeren Armierung angeordnet ist, zwischen einer ersten Hauptschicht und einer zweiten Hauptschicht angeordnet ist.

12. Schichtlager nach Anspruch 1,
**dadurch gekennzeichnet, dass** die Luftwiderstandsachse (AXTRA) bezüglich des geometrischen Zentrums (CTR) versetzt ist.

13. Schichtlager nach Anspruch 1,
**dadurch gekennzeichnet, dass** die erste Dicke (e1) sich stetig zwischen der ersten minimalen Dicke (e1MIN) und der maximalen Dicke (e1MAX) ändert, wobei die zweite Dicke (e2) sich stetig zwischen der zweiten minimalen Dicke (e2min) und der zweiten maximalen Dicke (e2max) auf der Höhe der Achse der Veränderung des Rotorblattverstellwinkels (AXPAS) ändert.

14. Rotor (5) mit einer Nabe (6) und einer Mehrzahl von Rotorblättern (7), wobei jedes Rotorblatt (7) mit der Nabe (6) über ein Schichtlager (10) verbunden ist, das eine innere Armierung (11) und eine äußere Armierung (12) aufweist, wobei das Lager (10) ein elastomeres Element (15) aufweist mit einem Stapel von Hauptschichten (20, 30) und Nebenschichten (40), wobei jede Hauptschicht (20, 30) ein einziges weiches Material (20', 30') und jede Nebenschicht (40) ein einziges steifes Material (40') aufweist, wobei eine Armierung (11) eine Drehbewegung (ROTBAT, ROTTRA, ROTPAS) relativ zu der anderen Armierung (12) um eine Schlagachse (AXBAT) des Rotorblatts (10) sowie um eine Luftwiderstandsachse (AXTRA) und um eine Achse der Veränderung des Rotorblattverstellwinkels (AXPAS) dieses Rotorblatts (10) ausführen kann, wobei die Schlagachse (AXBAT) und die Achse der Veränderung des Rotorblattverstellwinkels (AXPAS) ein geometrisches Zentrum (CTR) gemeinsam haben, wobei die Achse der Veränderung des Rotorblattverstellwinkels (AXPAS) und die Schlagachse (AXBAT) zusammen eine Luftwiderstandsebene (PTRA) definieren, wobei die Achse der Veränderung des Rotorblattverstellwinkels (AXPAS) und die Luftwiderstandsachse (AXTRA) gemeinsam eine Schlagebene (PBAT) definieren, wobei die Luftwiderstandsachse (AXTRA) und die Schlagachse (AXBAT) gemeinsam eine Ebene der Veränderung des Rotorblattverstellwinkels (PPAS) definieren,
**dadurch gekennzeichnet, dass** das Lager (10) ein Lager gemäß einem der Ansprüche 1 bis 13 ist.

15. Luftfahrzeug (1),
**dadurch gekennzeichnet, dass** es einen Rotor (5) nach Anspruch 14 aufweist.

## Claims

1. A laminated thrust bearing (10) comprising an inner frame (11) and an outer frame (12), said thrust bearing (10) comprising an elastomeric member (15) that comprises a stack of main layers (20, 30) and secondary layers (40), each main layer (20, 30) comprising a single flexible material (20', 30') and each secondary layer (40) comprising a single rigid material (40"), one frame (12) being able to perform a rotary movement (ROTBAT, ROTTRA, ROTPAS) in relation to the other frame (11) about a flapping axis (AXBAT) and about a drag axis (AXTRA) and an axis of pitch variation (AXPAS), said flapping axis (AXBAT) and said axis of pitch variation (AXPAS) having a common geometric centre (CTR), said axis of pitch variation (AXPAS) and said flapping axis (AXBAT) together defining a drag plane (PTRA), said axis of pitch variation (AXPAS) and said drag axis (AXTRA) together defining a flapping plane (PBAT), said drag axis (AXTRA) and said flapping axis (AXBAT) together defining a plane of variation of the pitch angle (PPAS), each secondary layer fitting closely to each adjacent main layer,
said stack comprising at least one first main layer (20) and at least one second main layer (30), each first main layer (20) having, in said drag plane (PTRA), a first thickness (e1) that varies between a first minimum thickness (e1MIN) at the axis of pitch variation (AXPAS) and a first maximum thickness (e1MAX) at the flapping axis (AXBAT), each second main layer (30) having, in said drag plane (PTRA), a second thickness (e2) that varies between a second minimum thickness (e2min) at the flapping plane (AXBAT) and a second maximum thickness (e2max) at the axis of pitch variation (AXPAS), the thickness (e1, e2) of each main layer (20, 30) being constant in the flapping plane (PBAT) and in the plane of variation of the pitch angle (PPAS), **characterised in that** said thrust bearing does not have any empty space between a main layer and a secondary layer.

2. A laminated thrust bearing according to Claim 1,
**characterised in that** the laminated thrust bearing comprises a first sub-assembly (16) of at least one first main layer, which is arranged between the inner frame (11) and a second sub-assembly (17) of at least one second main layer, said second sub-assembly (17) being arranged between said first sub-assembly (16) and the outer frame (12), the first sub-assembly (16) and the second sub-assembly (17) comprising a common secondary layer (41).

3. A laminated thrust bearing according to any one of Claims 1 to 2,
**characterised in that** the flexible material (20', 30') of the main layers (20, 30) belongs to the elastomer group.

4. A laminated thrust bearing according to any one of Claims 1 to 3,
**characterised in that** the rigid material (40') of the secondary layers (40) belongs to the group which comprises metals and reinforced plastics materials.

5. A laminated thrust bearing according to any one of Claims 1 to 4,
**characterised in that** said outer frame (12) comprises a means (50) for connection to a blade (7).

6. A laminated thrust bearing according to any one of Claims 1 to 5,
**characterised in that** said inner frame (11) comprises a means for fixing to a hub (6).

7. A laminated thrust bearing according to any one of Claims 1 to 6,
**characterised in that** each main layer (20, 30) and each secondary layer (40) has a first symmetry in the drag plane (PTRA), in relation to the axis of pitch variation (AXPAS).

8. A laminated thrust bearing according to Claim 7,
**characterised in that** each main layer (20, 30) and each secondary layer (40) has a second symmetry in the drag plane (PTRA), in relation to the flapping axis (AXBAT).

9. A laminated thrust bearing according to any one of Claims 1 to 8,
**characterised in that** each secondary layer (40) has a third thickness (e3) that is constant in the flapping plane (PBAT), the drag plane (PTRA) and the plane of variation of the pitch angle (PPAS).

10. A laminated thrust bearing according to any one of Claims 1 to 8,
**characterised in that** at least one secondary layer has a third variable thickness, the thickness of a sub-part including said secondary layer of third variable thickness and of a main layer adjacent to this secondary layer being constant.

11. A laminated thrust bearing according to Claim 1,
**characterised in that** each secondary layer located between the inner frame and the outer frame is arranged between a first main layer and a second main layer.

12. A laminated thrust bearing according to Claim 1,
**characterised in that** said drag axis AXTRA is offset in relation to the geometric centre (CTR).

13. A laminated thrust bearing according to Claim 1,
**characterised in that** said first thickness (e1) varies continuously between said first minimum thickness (e1MIN) and said maximum thickness (e1MAX), said second thickness (e2) varying continuously between said second minimum thickness (e2min) and said second maximum thickness (e2max) at the axis of pitch variation (AXPAS).

14. A rotor (5) equipped with a hub (6) and a plurality of blades (7), each blade (7) being connected to the hub (6) by a laminated thrust bearing (10) comprising an inner frame (11) and an outer frame (12), said thrust bearing (10) comprising an elastomeric member (15) that comprises a stack of main layers (20, 30) and secondary layers (40), each main layer (20, 30) comprising a single flexible material (20', 30') and each secondary layer (40) comprising a single rigid material (40'), one frame (11) being able to perform a rotary movement (ROTBAT, ROTTRA, ROTPAS) in relation to the other frame (12) about a flapping axis (AXBAT) of the blade (10) and about a drag axis (AXTRA) and an axis of pitch variation (AXPAS) of this blade (10), said flapping axis (AXBAT) and said axis of pitch variation (AXPAS) having a common geometric centre (CTR), said axis of pitch variation (AXPAS) and said flapping axis (AXBAT) together defining a drag plane (PTRA), said axis of pitch variation (AXPAS) and said drag axis (AXTRA) together defining a flapping plane (PBAT), said drag axis (AXTRA) and said flapping axis (AXBAT) together defining a plane of variation of the pitch angle (PPAS),
**characterised in that** said thrust bearing (10) is according to any one of Claims 1 to 13.

15. An aircraft (1),
**characterised in that** it comprises a rotor (5) according to Claim 14.
